# FASCICULE DE BREVET EUROPEEN

(11) **EP 1 797 477 B1**
(45) Date de publication et mention de la délivrance du brevet: **20.04.2016**
(21) Numéro de dépôt: 05810752.5
(22) Date de dépôt: 05.10.2005
(51) Int. Cl.: G01J 11/00, G02F 1/01

(54) **Procédé d'utlisation d'une porte optique Térahertz**
Verfahren zur Verwendung von einem optischen Terahertz-Gate
Method of using a Terahertz optical gate

(30) Priorité: 08.10.2004 FR 0452307
(43) Date de publication de la demande: 20.06.2007
(73) Titulaire: Commissariat à l'Énergie Atomique et aux Énergies Alternatives, 75015 Paris (FR); Centre National de la Recherche Scientifique, 75016 Paris (FR); Université de Bordeaux I, 33405 Talence Cedex (FR)
(72) Inventeur: CANIONI, Lionel, F-33170 GRADIGNAN (FR); MALECK-RASSOUL, Rysvan, F-33600 PESSAC (FR); MOUNAIX, Patrick, F-33910 ST DENIS DE PILE (FR); SARGER, Laurent, F-33400 TALENCE (FR)
(74) Mandataire: Ahner, Philippe
(86) Numéro de dépôt international: PCT/FR2005/050813
(87) Numéro de publication internationale: WO 2006/040487

(56) Documents cités:
- US-A- 6 144 512
- PARK S-G ET AL: "ANALYSIS OF TERAHERTZ WAVEFORMS MEASURED BY PHOTOCONDUCTIVE AND ELECTROOPTIC SAMPLING" IEEE JOURNAL OF QUANTUM ELECTRONICS, IEEE INC. NEW YORK, US, vol. 35, no. 5, mai 1999 (1999-05), pages 810-819, XP000851527 ISSN: 0018-9197
- TREBINO R ET AL: "USING PHASE RETRIEVAL TO MEASURE THE INTENSITY AND PHASE OF ULTRASHORT PULSES: FREQUENCY-RESOLVED OPTICAL GATING" JOURNAL OF THE OPTICAL SOCIETY OF AMERICA - A, OPTICAL SOCIETY OF AMERICA, WASHINGTON, US, vol. 10, no. 5, 1 mai 1993 (1993-05-01), pages 1101-1111, XP000363246 ISSN: 1084-7529
- KADLEC F ET AL: "Optical two-photon absorption in GaAs measured by optical pump-terahertz probe spectroscopy", INFRARED AND MILLIMETER WAVES, 2004 AND 12TH INTERNATIONAL CONFERENCE ON TERAHERTZ ELECTRONICS, 2004. CONFERENCE DIGEST OF THE 2004 JOINT 29 TH INTERNATIONAL CONFERENCE ON KARLSRUHE, GERMANY SEPT. 27 - OCT. 1, 2004, PISCATAWAY, NJ, USA,IEEE, 27 September 2004 (2004-09-27), pages 497-498, XP010795079, ISBN: 978-0-7803-8490-3

## Description

### DOMAINE TECHNIQUE

L'invention concerne un procédé d'utilisation d'une porte optique large bande dans le domaine infrarouge lointain ou submillimétrique ou terahertz. Elle concerne également un procédé d'utilisation d' une matrice de portes optiques. Elle est applicable notamment à un procédé d'utilisation d'un détecteur d'impulsions terahertz et à la mesure de ce signal. Elle est également applicable à un procédé d'utilisation d'un générateur terahertz.

### ÉTAT DE LA TECHNIQUE ANTÉRIEURE

La détection d'impulsions terahertz de large bande est réalisée généralement dans des architectures dite TDS pour (« time domain spectroscopy ») par:
- la mesure du courant induit par l'excitation de photoconducteurs par des impulsions lasers ultracourtes.
- la mesure de la biréfringence optique induite par effet électro-optique, par le rayonnement terahertz, dans un cristal non linéaire semiconducteur, sur une impulsion laser ultracourte de référence.

En ce qui concerne la génération d'impulsions terahertz de large bande, on connaît deux procédés:
- l'excitation de photoconducteurs par des impulsions laser ultracourtes. Le spectre rayonné au cours du transitoire de conduction s'étale facilement sur plusieurs terahertz.
- le redressement optique dans des matériaux transparents pour la génération de champs terahertz intenses dont l'intensité est proportionnelle à l'excitation optique.

Pour obtenir des champs terahertz intenses, le flux électromagnétique est fortement limité dans le cas de la photoconduction du fait de la saturation de l'absorption inter-bande. Le réglage de l'illumination du photoconducteur est extrêmement contraint par les dimensions de la zone utile.

Dans le cas du redressement optique, le rendement de génération du rayonnement terahertz exige l'utilisation de sources lasers encore plus intenses. Pour cela le recours à des impulsions lasers ultracourtes amplifiées, en général à basse cadence, croûteuses et complexes à utiliser, est nécessaire. De plus, un réglage critique de détection est indispensable.

### EXPOSÉ DE L'INVENTION

L'invention permet de résoudre ces difficultés.

F. Kadlec et al., « Optical two-photon absorption in GaAs measured by optical pump-terahertz probe spectroscopy », infrared and millimeter waves, 2004 and 12th int. conf. on terahertz electronics, 2004. Conf. digest of the 2004 joint 29th int. conf. on Karlsrue, Germany sept. (2004-09-27), pp. 497-498, concerne l'absorption optique à deux photons dans GaAs mesurée par spectroscopie à sonde térahertz à pompe optique.

L''invention concerne donc un procédé d'utilisation d'une porte optique large bande dans le domaine des terahertz (longueurs d'ondes dans l'infrarouge lointain). Elle comporte:
- une première source optique émettant un premier faisceau dans ledit domaine des terahertz,
- une première lame en matériau semiconducteur éclairée par ledit faisceau terahertz,
   et
- une deuxième source optique émettant un deuxième faisceau à une longueur d'onde permettant de saturer la première lame en matériau semiconducteur et de la rendre réflectrice aux longueurs d'ondes terahertz.

Les impulsions du deuxième faisceau sont retardées d'un temps ajustable par rapport aux impulsions terahertz du premier faisceau.

Les impulsions du deuxième faisceau sont, en principe, au même taux de répétition que les impulsions terahertz du premier faisceau.

Selon l'invention, sur un temps déterminé, les retards des différentes impulsions du deuxième faisceau sont différents de telle façon que ces différentes impulsions explorent différentes positions de temps dans les impulsions terahertz du premier faisceau.

Selon une forme de réalisation, la porte selon l'invention comporte une deuxième lame en matériau semiconducteur éclairée par un troisième faisceau d'une longueur d'onde permettant de saturer cette deuxième lame et de la rendre réflectrice aux longueurs d'ondes terahertz. Cette deuxième lame est, de préférence, située selon la direction du faisceau terahertz transmis par la première lame.

On pourra prévoir que les impulsions du troisième faisceau sont retardées d'un temps constant par rapport aux impulsions du deuxième faisceau.

Avantageusement, les longueurs d'ondes du deuxième et du troisième faisceau (FIR, FIR') sont situées dans l'infrarouge.

Egalement avantageusement, les première et deuxième lames sont en silicium.

L'invention concerne également une matrice ou une rangée de portes optiques appliquant la porte optique ainsi décrite. Le premier et/ou le deuxième faisceaux éclairent alors sélectivement différentes zones de la plaque en matériau semiconducteur, chaque dite zone constituant une porte optique.

L'invention concerne également un système de mesure appliquant la porte ainsi décrite. Ce système de mesure comporte un appareil de détection optique et de mesure de signal, situé selon la direction du faisceau terahertz réfléchi par la première lame.

Selon une variante de réalisation, ce système de mesure comporte un appareil de détection optique et de mesure de signal, situé sur la direction du faisceau terahertz transmis par la deuxième lame.

L'invention concerne également un générateur terahertz appliquant la porte optique décrite précédemment. Ce générateur comporte une première cavité terahertz comportant un milieu à gain situé dans une deuxième cavité laser et pompé par le signal de cette deuxième cavité. La première cavité comporte en outre une plaque en matériau semiconducteur susceptible d'être éclairée à saturation par des impulsions optiques fournies par la première cavité.

Pour avoir un synchronisme de pompage des deux cavités, on prévoira que la première cavité et la deuxième cavité ont des longueurs optiques équivalentes.

Par ailleurs, on pourra prévoir avantageusement que la deuxième cavité laser est une cavité fonctionnant dans la gamme de l'infrarouge.

### BRÈVE DESCRIPTION DES DESSINS

Les différents objets et caractéristiques de l'invention apparaîtront plus clairement dans la description qui va suivre ainsi que dans les figures annexées sur lesquelles :
- la figure la représente une porte optique permettant de mesurer l'énergie d'un signal terahertz,
- la figure 1b représente un chronogramme de fonctionnement de la porte de la figure 1a,
- la figure 2a représente une double porte optique permettant de mesurer l'énergie et le retard d'un signal terahertz,
- la figure 2b représente un chronogramme de fonctionnement du système de la figure 2a,
- la figure 3 représente l'application de l'invention à un exemple de générateur terahertz, et
- la figure 4 représente un système matriciel de portes optiques.

### EXPOSÉ DÉTAILLÉ DE MODES DE RÉALISATION PARTICULIERS

L'invention est basée sur l'utilisation de la photoconduction de matériaux semiconducteurs pour manipuler un rayonnement sub-millimétrique.

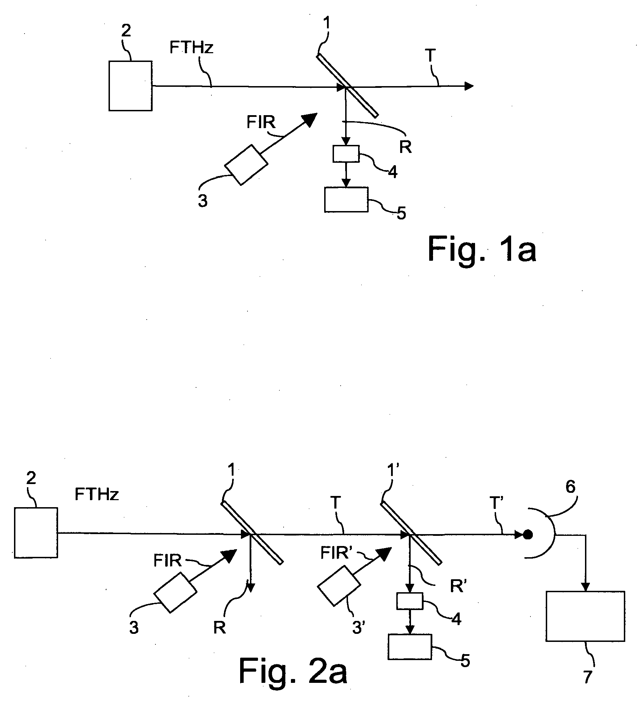

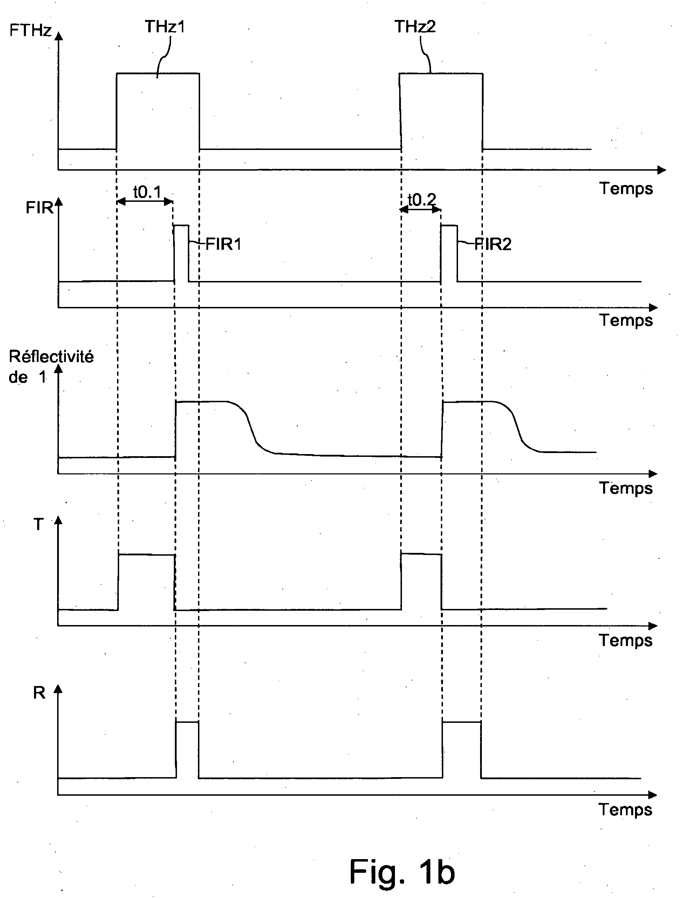

En se reportant aux figures 1a et 1b, on va, tout d'abord, décrire une architecture extra-cavité dans laquelle un faisceau terahertz est intercepté par une lame de semiconducteur.

Une source optique 2 émet un faisceau optique FTHz dans le domaine de l'infrarouge lointain (bande de longueurs d'ondes des terahertz) qui éclaire une lame en matériau semiconducteur 1. Par ailleurs, la lame 1 peut être éclairée par un faisceau infrarouge FIR émis par une source infrarouge 3. La lame en matériau semiconducteur peut être saturée par ce rayonnement infrarouge FIR et lorsqu'elle est saturée, elle devient réfléchissante à la lumière du faisceau terahertz FTHz. En l'absence de rayonnement infrarouge, la lame 1 est transparente (ou quasi-transparente) au faisceau terahertz FTHz.

Un dispositif 4 permet de collecter et de détecter la lumière qui est transmise par la lame 1. Ce dispositif 4 transmet un signal électrique correspondant à un appareil de mesure 5.

La figure 1b représente un chronogramme de fonctionnement du système de la figure 1a.

Le premier diagramme des temps représente des impulsions terahertz transmises à la lame en matériau semiconducteur 1;

Le deuxième diagramme des temps représente des impulsions infrarouges FIR destinées à rendre réfléchissante la lame 1. Ces impulsions FIR sont décalées dans le temps par rapport aux impulsions terahertz FTHz d'un retard variable t0.1, t0.2, etc.

Le temps de réponse en réflectivité du matériau semiconducteur de la lame 1 (représenté par le troisième diagramme) est court devant la montée du champ terahertz. De plus, le matériau semiconducteur de la lame 1 présente un temps de descente en réflectivité long devant la durée d'une impulsion terahertz, mais plus court que la période de répétition des impulsions terahertz.

La lame 1 fait office de miroir métallique à large bande (ou porte optique large bande) et réfléchit alors l'énergie, avec une très grande efficacité (supérieure à 80%) vers un détecteur large-spectre à grande constante de temps (éventuellement un bolomètre).

Le quatrième diagramme des temps représente le signal terahertz T transmis par la lame 1.

Le cinquième diagramme des temps représente le signal terahertz R réfléchi par la lame 1.

De préférence, le signal d'impulsions FIR est à un même taux de répétition que le signal d'impulsions FTHz et est avantageusement dérivé de ce signal. Les impulsions telles que FIR1 sont synchronisées avec les impulsions telle que THzl en présentant les retards indiqués ci-dessus.

Selon l'invention, on fait varier les retards tels que t0.1. Les temps t0.1, t0.2 sont donc différents les uns des autres et ils sont de préférence en progression constante. Les mesures des faisceaux réfléchis R, effectuées par l'appareil de mesure 5 pour un grand nombre d'impulsions (FTHz1) du faisceau terahertz FTHz, permettent ainsi d'obtenir l'intégrale du signal terahertz. Une simple dérivation permet de reconstruire le signal en énergie résolu en temps.

La figure 2a représente une variante du système de la figure la dans laquelle deux lames 1 et 1' en matériau semiconducteur sont disposées en série selon la direction du faisceau terahertz émis par la source 2. Chaque porte est éclairée indépendamment par des impulsions infrarouges émises par des sources 3 et 3'.

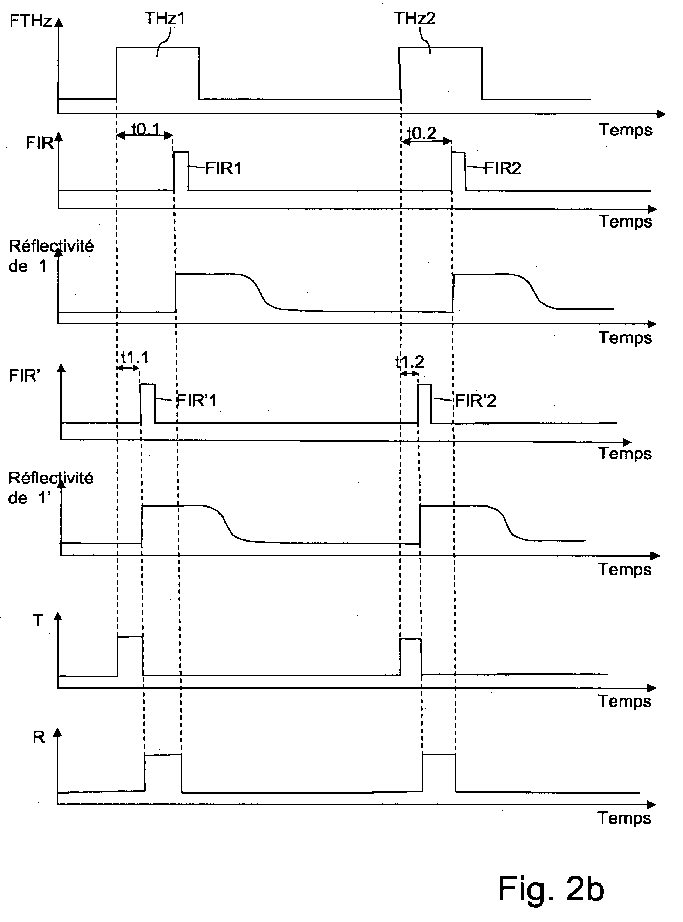

Comme précédemment, les impulsions FIR émises par la source 3 sont décalées dans le temps par rapport aux impulsions terahertz FTHz. Ce retard varie. Sur la figure 2b, on voit ainsi que les impulsions FIR1, FIR2 ont des retards t0.1, t0.2 respectivement avec les impulsions terahertz.

Les impulsions telles que FIR'1, FIR'2 émises par la source 3' ont un retard constant par rapport aux impulsions émises par la source 3. Ces impulsions FIR'1, FIR'2 sont retardés respectivement de t1.1, t1.2 par rapport aux impulsions terahertz.

Durant l'éclairement de la lame 1 par les impulsions FIR, la lame 1 réfléchit les impulsions terahertz sous la forme des impulsions R1, R2, R3 (voir figure 2b). La lame 1 permet ainsi de découper les impulsions terahertz et de ne transmettre à la deuxième lame 1' que les portions d'impulsions terahertz comprises entre les flancs avant des impulsions terahertz et les flancs avant des impulsions FIR, c'est-à-dire durant les retards t0.1 et t0.2 (voir les deuxième et troisième diagrammes des temps de la figure 2b).

La lame 1' ne reçoit donc que les impulsions terahertz transmises par la lame 1. La lame 1' est rendue réfléchissante (quatrième diagramme de la figure 2b) par les impulsions FIR'. Elle reste réfléchissante durant un temps qui excède la durée des impulsions FIR'. Le flanc avant des impulsions FIR'1, FIR'2 découpe donc, dans les impulsions terahertz transmises par la lame 1, des impulsions T' qui sont transmises et des impulsions R' qui sont réfléchies (voir sixième et septième diagrammes de la figure 2b).

On voit donc sur le septième diagramme de la figure 2b que la durée des impulsions terahertz réfléchies par la lame 1' est définie par les flancs avant des impulsions FIR et FIR'.

Les séries d'impulsions FIR1, FIR2 et FIR'1, FIR'2 sont décalées dans le temps d'un retard constant (voir précédemment). Il en résulte que la durée des impulsions R' réfléchies par la deuxième lame 1' est constante.

Chaque lame 1 et 1' constituant une porte, une fraction de chaque impulsion terahertz est donc réfléchie en R' lorsque la lame 1 n'est pas réfléchissante et lorsque la lame 1' est réfléchissante.

Le système réfléchit des impulsions terahertz R' correspondant chacune à une fraction d'une impulsion terahertz. Ces différentes impulsions terahertz R' sont localisées à des instants différents dans les impulsions terahertz d'entrée FTHz successives en raison des variations des retards t0.1, t0.2 d'une part et t1.1 et t1.2 d'autre part.

Les impulsions T'1, T'2, T'3 sont collectées et détectées par le dispositif 6 qui transmet des impulsions électriques correspondantes à un circuit de traitement 7.

Dans ces conditions, on a accès à deux informations sur le champ terahertz:
- le carré du champ dans le temps, et
- le retard.

Ces deux informations permettent de remonter aussi à une description complète du champ (amplitude et phase).

En faisant varier le retard t, on reconstruit alors directement le signal avec le détecteur, avec une ouverture suffisamment brève pour limiter la notion de bruit.

On voit donc que la porte optique selon l'invention, placée devant un détecteur intégrateur ultrasensible (bolomètre), permet de détecter un rayonnement.

Le système de détection d'impulsions terahertz selon l'invention ainsi décrit est aussi sensible que les systèmes exploitant les photoconducteurs ou l'effet électro-optique. Le système de l'invention présente en outre l'avantage de ne nécessiter aucun réglage particulier du détecteur situé derrière la porte optique.

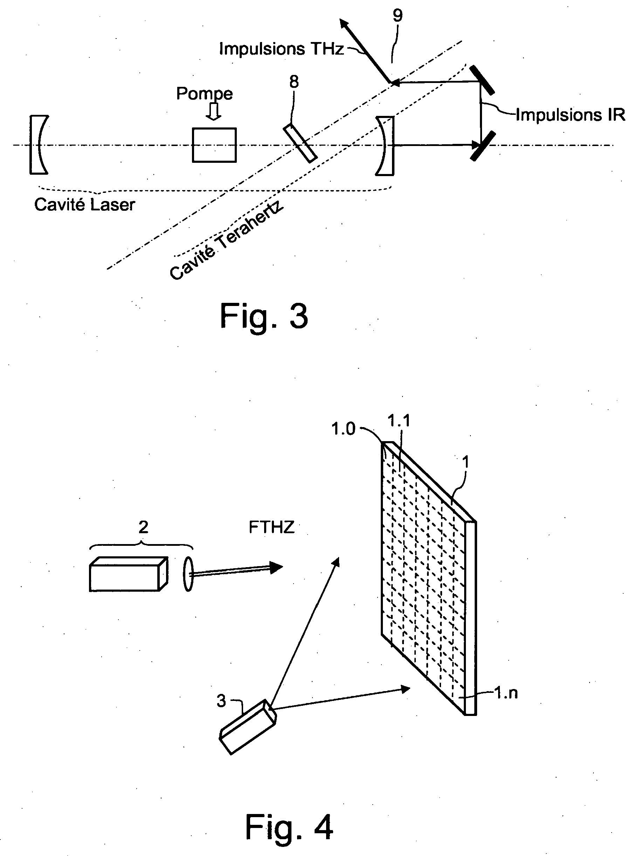

En se reportant à la figure 3, on va maintenant décrire une application de l'invention à un générateur terahertz.

L'obtention de flux intenses dans le domaine terahertz, sans avoir recours à des systèmes laser amplifiés, peut se concevoir par insertion d'un élément photoconducteur ou, de façon plus générale, d'un générateur d'onde terahertz à l'intérieur d'une cavité fonctionnant en régime pulsé de haute cadence (idéalement un laser à modes bloqués en régime femtoseconde dans l'infrarouge). L'énergie du champ rayonné dans le domaine terahertz est modeste mais, à haute cadence, elle correspond à celle de l'oscillateur. Une cavité peut être construite de façon à collecter et à accumuler cette onde de façon synchrone (ou sous synchrone) avec l'oscillateur, si les longueurs de cavité sont compatibles.

On prévoira de préférence des longueurs de cavité équivalentes pour la cavité laser et pour la cavité terahertz de façon à avoir ce synchronisme.

La difficulté technologique de cette sur-cavité est relativement modeste étant donné les longueurs d'ondes relativement longues dans le domaine terahertz et la durée de quelques picosecondes de l'impulsion terahertz. Il s'agit en fait de la réalisation d'un oscillateur paramétrique optique synchrone (OPO synchrone) dans le domaine terahertz.

Cette cavité à fort pouvoir de surtension peut être munie d'un foyer intra-cavité auxiliaire et d'une lame de semiconducteur inclinée à l'angle de Brewster pour limiter les pertes. Dans ces conditions, une impulsion de la cavité laser primaire (optique) correctement retardée dans le temps et sélectionnée par un moyen annexe est envoyée sur la lame en matériau semiconducteur 9. Ce qui a pour conséquence de transformer la lame en un miroir réfléchissant qui, si le temps de réponse est suffisamment court pour revenir au repos après chaque extraction (et ainsi maintenir un taux de récurrence de génération du rayonnement terahertz intéressant), fait alors office d'extracteur de cavité. Une telle architecture compacte permet de délivrer des puissances terahertz comparables à celles que l'on obtient avec des systèmes incluant des amplificateurs pour les lasers infrarouge.

On voit donc que la porte selon l'invention permet d'extraire d'une cavité de stockage la quasi-totalité du rayonnement à large spectre d'une source pulsée (fonction d'extracteur de cavité)

Ce générateur terahertz constitue une alternative à l'utilisation d'impulsions lasers ultracourtes amplifiées, fonctionnant à plus basse cadence, pour la génération d'ondes terahertz intenses.

L'invention est également applicable à une matrice de portes optique. Pour ce faire, comme cela est représenté sur la figure 4, on considère qu'une plaque 1 en matériau semiconducteur comporte une matrice de zones 1.0, 1.1, ..., 1.n. Chaque zone est susceptible d'être éclairée sélectivement par un ou plusieurs faisceaux terahertz et par un ou plusieurs faisceaux infrarouge. Chaque zone de la plaque 1 constitue une porte optique et l'éclairage simultané d'une zone par un faisceau terahertz et par un faisceau infrarouge permet d'activer la porte correspondant à cette zone.

A titre d'exemple, sur la figure 4, la source optique 3 fournit un faisceau FIR qui éclaire toute la surface de la plaque 1 et qui prépare le fonctionnement de toutes les portes. La source optique 2 fournit un faisceau FTHz qui éclaire sélectivement les zones 1.0 à 1.n de la plaque 1 et qui déclenche le fonctionnement individuel de chaque porte.

D'autres modes d'exploitation pourraient être envisagés sans sortir du cadre de l'invention.

## Revendications

1. Procédé d'utilisation d'une porte optique large bande dans le domaine des terahertz (longueurs d'ondes de l'infrarouge lointain), comportant une première source optique (2) émettant un premier faisceau (FTHz) formé d'impulsions dans ledit domaine des terahertz, une première lame en matériau semiconducteur (1) éclairée par ledit premier faisceau, et une deuxième source optique (3) émettant un deuxième faisceau (FIR) formé d'impulsions à une longueur d'onde permettant de saturer la première lame (1) en matériau semiconducteur et de la rendre réflectrice aux longueurs d'ondes terahertz, **caractérisé en ce que** les impulsions (FIR1, FIR2) du deuxième faisceau sont retardées d'un temps variable par rapport aux impulsions (THz1, THz2, THz3) du premier faisceau, les impulsions du premier faisceau et les impulsions du deuxième faisceau sont répétées dans le temps et l'on fait varier d'une impulsion à l'autre le retard de l'impulsion du deuxième faisceau par rapport à l'impulsion du premier faisceau.

2. Procédé selon la revendication 1, dans lequel les impulsions du deuxième faisceau (FIR) sont au même taux de répétition que les impulsions du premier faisceau (FTHz).

3. Procédé selon la revendication 2, dans lequel, sur un temps déterminé, les retards des différentes impulsions (FIR1, FIR2) du deuxième faisceau sont différents de telle façon que ces différentes impulsions explorent différentes positions de temps dans les impulsions (THz1, THz2, THz3) du premier faisceau.

4. Procédé selon la revendication 3, dans lequel on utilise en outre une deuxième lame en matériau semiconducteur (1') éclairée par un troisième faisceau (FIR') d'une longueur d'onde permettant de saturer cette deuxième lame (1') et de la rendre réflectrice aux longueurs d'ondes terahertz, cette deuxième lame étant située selon la direction du faisceau terahertz transmis par la première lame (1).

5. Procédé selon la revendication 4, dans lequel les impulsions (FIR'1, FIR'2, FIR'3) du troisième faisceau sont retardées d'un temps constant par rapport aux impulsions (FIR1, FIR2) du deuxième faisceau.

6. Procédé selon l'une quelconque des revendications 1 à 5, dans lequel les longueurs d'ondes du deuxième et du troisième faisceau (FIR, FIR') sont situées dans l'infrarouge.

7. Procédé selon l'une quelconque des revendications 1 à 6, dans lequel les première et deuxième lames (1, 1') sont en silicium.

8. Procédé selon l'une quelconque des revendications 1 à 7, dans lequel le premier faisceau et/ou le deuxième faisceau (FTHz, FIR) éclairent sélectivement différentes zones (1.0 à 1.n) de la plaque (1) en matériau semiconducteur, chaque dite zone constituant une porte optique, les différentes zones formant une matrice ou une rangée de portes optiques.

9. Procédé de mesure utilisant le procédé selon l'une quelconque des revendications 1 à 7, ce procédé de mesure utilisant un appareil de détection optique et de mesure de signal (4, 5), situé selon la direction du faisceau terahertz (R) réfléchi par la première lame (1).

10. Procédé de mesure utilisant le procédé selon l'une quelconque des revendications 4 à 8, ce procédé de mesure utilisant un appareil de détection optique et de mesure de signal (6, 7), situé selon la direction du faisceau terahertz (T') transmis par la deuxième lame (1').

11. Procédé de génération de rayonnement terahertz utilisant le procédé selon l'une quelconque des revendications 1 à 7, ce procédé de génération utilisant une première cavité terahertz comportant un milieu à gain (8) situé dans une deuxième cavité laser et pompé par le signal de cette deuxième cavité, la première cavité comportant en outre une plaque en matériau semiconducteur (9) susceptible d'être éclairée à saturation par des impulsions optiques fournies par la première cavité.

12. Procédé selon la revendication 11, dans lequel la première cavité et la deuxième cavité ont des longueurs optiques équivalentes.

13. Procédé terahertz selon la revendication 11, dans lequel la deuxième cavité laser est une cavité fonctionnant dans la gamme de l'infrarouge.

## Patentansprüche

1. Verfahren zur Verwendung eines optischen Breitbandgatters im Terahertzbereich (Wellenlängen im fernen Infrarot), umfassend eine erste optische Quelle (2), die einen ersten Strahl (FTHz) emittiert, der durch Pulse im Terahertzbereich gebildet ist, ein erstes Blatt aus Halbleitermaterial (1), das durch den ersten Strahl beleuchtet wird, und eine zweite optische Quelle (3), die einen zweiten Strahl (FIR) emittiert, der durch Pulse mit einer Wellenlänge gebildet ist, die es erlaubt, das erste Blatt (1) aus Halbleitermaterial zu sättigen und es für Terahertz-Wellenlängen reflektierend zu machen, **dadurch gekennzeichnet, dass** die Pulse (FIR1, FIR2) des zweiten Strahls um eine variable Zeit relativ zu den Pulsen (THz1, THz2, THz3) des ersten Strahls verzögert sind, wobei die Pulse des ersten Strahls und die Pulse des zweiten Strahls zeitlich wiederholt werden, und wobei man von einem Puls zum anderen die Verzögerung des Pulses des zweiten Strahls relativ zum Puls des ersten Strahls variiert.

2. Verfahren nach Anspruch 1, bei dem die Pulse des zweiten Strahls (FIR) bei der gleichen Wiederholungsrate sind wie die Pulse des ersten Strahls (FTHz).

3. Verfahren nach Anspruch 2, bei dem auf einem vorbestimmten Zeitraum die Verzögerungen der verschiedenen Pulse (FIR1, FIR2) des zweiten Strahls derart verschieden sind, dass diese verschiedenen Pulse verschiedene zeitliche Positionen in den Pulsen (THz1, THz2, THz3) des ersten Strahls abtasten.

4. Verfahren nach Anspruch 3, bei dem man ferner ein zweites Blatt aus Halbleitermaterial (1') verwendet, das durch einen dritten Strahl (FIR') mit einer Wellenlänge beleuchtet wird, die es erlaubt, dieses zweite Blatt (1') zu sättigen und es für Terahertz-Wellenlängen reflektierend zu machen, wobei dieses zweite Blatt entlang der Richtung des Terahertz-Strahls angeordnet ist, der durch das erste Blatt (1) hindurch transmittiert wird.

5. Verfahren nach Anspruch 4, bei dem die Pulse (FIR'1, FIR'2, FIR'3) des dritten Strahls um eine konstante Zeit relativ zu den Pulsen (FIR1, FIR2) des zweiten Strahls verzögert sind.

6. Verfahren nach einem der Ansprüche 1 bis 5, bei dem die Wellenlängen des zweiten und des dritten Strahls (FIR, FIR') im Infrarot liegen.

7. Verfahren nach einem der Ansprüche 1 bis 6, bei dem das erste und das zweite Blatt (1, 1') aus Silizium sind.

8. Verfahren nach einem der Ansprüche 1 bis 7, bei dem der erste Strahl und/oder der zweite Strahl (FTHz, FIR) selektiv verschiedene Zonen (1.0 bis 1.n) der Platte (1) aus Halbleitermaterial beleuchten, wobei jede derartige Zone ein optisches Gatter bildet, wobei die verschiedenen Zonen eine Matrix oder eine Reihe von optischen Gattern bilden.

9. Messverfahren, das das Verfahren nach einem der Ansprüche 1 bis 7 verwendet, wobei dieses Messverfahren ein Gerät zur optischen Erfassung und Signalmessung (4, 5) verwendet, das entlang der Richtung des Terahertz-Strahls (R) angeordnet ist, der durch das erste Blatt (1) reflektiert wird.

10. Messverfahren, das das Verfahren nach einem der Ansprüche 4 bis 8 verwendet, wobei dieses Messverfahren ein Gerät zur optischen Erfassung und Signalmessung (6, 7) verwendet, das entlang der Richtung des Terahertz-Strahls (T') angeordnet ist, der durch das zweite Blatt (1') hindurch transmittiert wird.

11. Verfahren zur Erzeugung von Terahertz-Strahlung unter Verwendung des Verfahrens nach einem der Ansprüche 1 bis 7, wobei dieses Erzeugungsverfahren eine erste Terahertz-Kavität verwendet, umfassend ein Verstärkungsmedium (8), das in einer zweiten Laserkavität angeordnet ist und durch das Signal dieser zweiten Kavität gepumpt wird, wobei die erste Kavität ferner eine Platte aus Halbleitermaterial (9) umfasst, die dazu ausgelegt ist, bis zur Sättigung durch optische Pulse beleuchtet zu sein, die durch die erste Kavität geliefert werden.

12. Verfahren nach Anspruch 11, bei dem die erste Kavität und die zweite Kavität äquivalente optische Wellenlängen haben.

13. Teraherzt-Verfahren nach Anspruch 11, bei dem die zweite Laserkavität eine Kavität ist, die im Infrarotbereich arbeitet.

## Claims

1. Method for using a wide band optical gate in the terahertz domain (wavelengths in the far infrared), comprising a first optical source (2) emitting a first beam (FTHz) formed of pulses in the said terahertz domain, a first plate (1) made of a semiconducting material illuminated by said first beam, and a second optical source (3) emitting a second beam (FIR) formed of pulses at a wavelength capable of saturating the first plate (1) made of a semiconducting material and making it reflective at terahertz wavelengths, **characterized in that** the pulses (FIR1, FIR2) of the second beam are delayed by a variable time with respect to pulses (THz1, THz2, THz3) in the first beam, the pulses of the first beam and the pulses of the second beam are repeated in time and the delays of the pulse at the second beam with respect to the pulse of the first beam is varied from one pulse to the other.

2. Method set forth in claim 1, in which the pulses of the second beam (FIR) take place at the same repetition rate as the pulses of the first beam (FTHz).

3. Method set forth in claim 2, in which delays of the different pulses (FIR1, FIR2) from the second beam within a given time are different, such that these different pulses explore different time positions in the pulses (THz1, THz2, THz3) of the first deam.

4. Method set forth in claim 3, wherein a second plate (1') is also used, made of a semiconducting material illuminated by a third beam (FIR') with a wavelength capable of saturating this second plate (1') and making it reflective at terahertz wavelengths, this second plate being located along the direction of the terahertz beam transmitted by the first plate (1).

5. Method set forth in claim 4, in which the pulses (FIR'1, FIR'2, FIR'3) in the third beam are delayed by a constant time with respect to pulses (FIR1, FIR2) in the second beam.

6. Method set forth in any one of claims 1 to 5, in which the wavelengths of the second and the third beam (FIR, FIR') are located in the infrared.

7. Method set forth in any one of claims 1 to 6, in which the first and second plates (1, 1') are made of silicon.

8. Method set forth in any one of claims 1 to 7, in which the first beam and/or the second beam (FTHz, FIR) selectively illuminate different zones (1.0 to 1.n) of the plate (1) made of a semiconducting material, each said zone forming an optical gate, the different zones forming a matrix or a row of optical gates.

9. Measurement method applying the method set forth in any one of claims 1 to 7, this measurement method using an optical detection and signal measurement apparatus (4, 5), located along the direction of the terahertz beam (R) reflected by the first plate (1).

10. Measurement method making use of the method set forth in any one of claims 4 to 8, this measurement method using an optical detection and signal measurement apparatus (6, 7), located along the direction of the terahertz beam (T') transmitted by the second plate (1').

11. Method for generating a terahertz radiation applying the method set forth in any one of claims 1 to 7, this generating method using a first terahertz cavity comprising a gain medium (8) located in a second laser cavity and pumped by the signal of this second cavity, the first cavity also comprising a plate made of a semiconducting material (9) that can be illuminated at saturation by optical pulses supplied by the first cavity.

12. Generator set forth in claim 11, in which the first cavity and the second cavity have equivalent optical lengths.

13. Terahertz method set forth in claim 11, in which the second laser cavity operates in the infrared range.
